(19) Europäisches Patentamt
European Patent Office
Office européen des brevets

(11) EP 2 501 190 A1

(12) EUROPEAN PATENT APPLICATION
published in accordance with Art. 153(4) EPC

(43) Date of publication:
19.09.2012 Bulletin 2012/38

(51) Int Cl.:
H04W 52/46 (2009.01)   H04B 7/15 (2006.01)
H04W 16/26 (2009.01)

(21) Application number: 10829950.4

(22) Date of filing: 10.11.2010

(86) International application number:
PCT/JP2010/069996

(87) International publication number:
WO 2011/058991 (19.05.2011 Gazette 2011/20)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 10.11.2009  JP 2009257216

(71) Applicant: Sharp Kabushiki Kaisha
Osaka-shi, Osaka 545-8522 (JP)

(72) Inventors:
• FUKUMOTO Shusaku
Osaka 545-8522 (JP)

• SUGAHARA, Shiro
Osaka 545-8522 (JP)
• TAKEHANA, Shuichi
Osaka 545-8522 (JP)
• FUKUMASA, Hidenobu
Osaka 545-8522 (JP)

(74) Representative: Müller - Hoffmann & Partner
Patentanwälte
Innere Wiener Strasse 17
81667 München (DE)

(54) WIRELESS COMMUNICATION SYSTEM, BASE STATION DEVICE, MOBILE STATION DEVICE, AND WIRELESS COMMUNICATION METHOD

(57) A wireless communication system (1) includes a base station (200), one or a plurality of RNs (300) associated with the base station (200), and one or a plurality of mobile stations (100). When the mobile station (100) and the base station (200) communicate without going through the RN (300), the wireless communication system (1) uses a first transmission power control method to control the transmission power of the mobile station (100), and, when the mobile station (100) and the base station (200) communicate via the RN (300), the wireless communication system uses a second transmission power control method to control the transmission power of the mobile station.

FIG. 1

EP 2 501 190 A1

**Description**

TECHNICAL FIELD

The present invention relates to a wireless communication system, a base station device, a mobile station device, and a wireless communication method.
The subject application claims priority based on the patent application No. 2009-257216 filed in Japan on November 10, 2009 and incorporates by reference herein the content thereof.

BACKGROUND ART

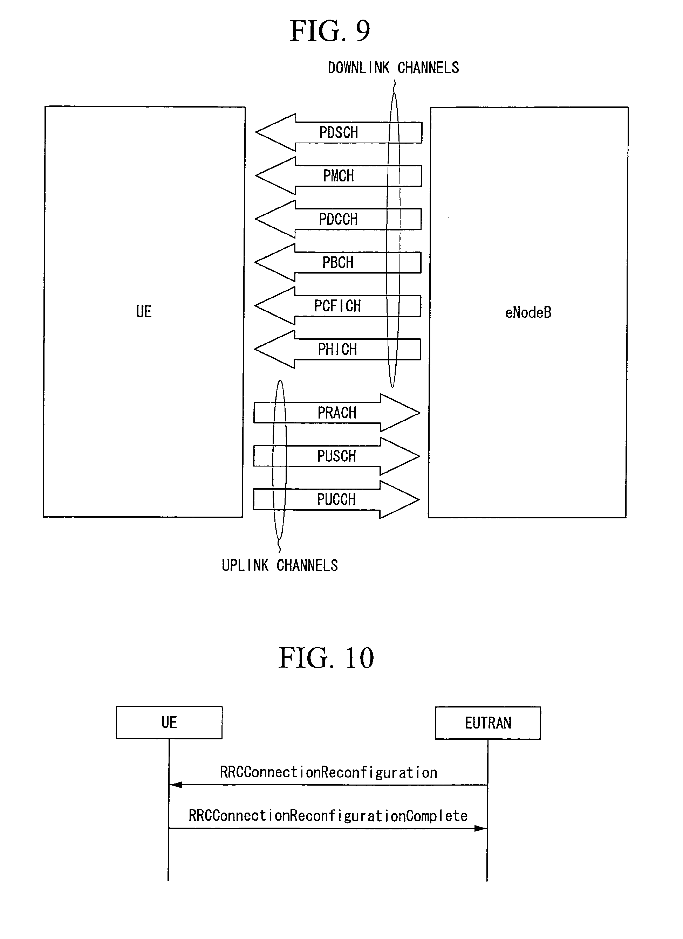

At present, the physical channels of the next-generation mobile communication system have been established to have a constitution such as shown in FIG. 9 (refer, for example, to Non-Patent Reference 1). The physical channels are constituted by an uplink channel directed from an UE to an eNB between a mobile station (also called a UE: User Equipment hereinafter) and a base station (also called an eNB: evolved Node B hereinafter), and a downlink channel directed from an eNB to a UE.
The uplink channel is constituted by a random-access channel (PRACH) that performs random access, an uplink shared channel (PUSCH) that transmits uplink data in accordance with base station schedule management, and an uplink control channel (PUCCH) that transmits control signal and the like related to the downlink signal.
The downlink channel is constituted by a physical downlink shared channel (PDSCH) that transfers data, a physical multicast channel (PMCH) that transfers a multicast channel, a physical downlink control channel (PDCCH) that transfers L1/L2 control information, a physical broadcast channel (PBCH) that transfers cell-specific notification information, a physical control format indicator channel (PCFICH) that transfers the number of OFDM symbols that transfer the PDCCH, and a physical hybrid ARQ indicator channel (PHICH) that transfers an ACK/NACK corresponding to an uplink HARQ.
Because the uplink signal power is involved in the received quality at a base station that is performing communication and also the amount of interference signal with respect to another base station, it is necessary to set the power appropriately. At present, the transmission power $P_{PUSCH}$ (i) of the uplink shared channel (PUSCH) is determined by the following formula, Equation (1) (refer, for example, to Non-Patent Reference 2).
$$P_{PUSCH}(i) = \min\{ P_{CMAX}, 10\log_{10}(M_{PUSCH}(i)) + P_{O\_PUSCH}(j) + \alpha(j) \cdot PL + \Delta_{TF}(i) + f(i)\}[\text{dBm}]$$

$$\cdots \quad (1)$$

$P_{CMAX}$ is the maximum transmission power determined based on the terminal class, $M_{PUSCH}(i)$ is the number of resource blocks allocated to the PUSCH, and $P_{O-PUSCH}(j)$ is the receiving signal power that is the target of power control in the base station (target value of received signal power in the base station), which is expressed by the sum of a parameter determined by the base station and a parameter that changes for each UE. In the case in which the value of j, to be described later, is 0 or 1, $\alpha(j)$ is a coefficient in the range from 0 to 1 determined by the cell, this being 1 when j=2. The PL (path loss) is the transmission path loss calculated at the UE, $\Delta_{TF}(i)$ is a correction value with respect to an adaptive modulation coding parameter, and f(i) is a correction value that uses either the absolute value or the accumulated value of a TPC (transmission power control) command transmitted on the downlink PDCCH. Although in the above-noted Equation (1) the transmission power $P_{PUSCH}(i)$ that is the transmission power of the mobile station is $10\log_{10}$ $(M_{PUSCH}(i)) + P_{O\_PUSCH}(j) + \alpha(j) \cdot PL + \Delta_{TF}(i) + f(i)$, this means that the maximum value thereof does not exceed the maximum transmission power $P_{CMAX}$.
In the above-noted Equation (1), i is a subframe number and j is a value from 0 to 2 indicating the type of grant when an eNB allocates a UE transmission frame (j=0 being a semi-persistent grant, j=1 being a dynamic scheduled grant, and j=2 being a random-access response grant).
Investigation is conducted with regard to the use of a relay node (hereinafter also called an RN or relay station) that relays a signal between a mobile station and a base station. An RN is connected to a network via a specific base station, the base station that has this RN being known as a donor eNB. A relay node has a physical cell ID that is different from that of the donor eNB, there being a Type1 that is constituted by a cell that is different from the donor eNB, and a Type2 that is not constituted by a cell that is different from the eNB. A Type2 RN does not have a unique physical cell ID, and is not an element that constitutes a new cell. A Type2 RN may not relay all of the signals that the eNB transmits, and may not transmit a synchronization signal or a common reference signal, or control channels such as the PDCCH.

In this case, it is possible for the UE to receive these signals only from the eNB.

In a Type1 RN, in the case in which the connection destination of the UE transitions from an eNB to an RN or in the reverse, a handover sequence is gone through. In the handover, as shown in FIG. 10, the currently connected eNB (or RN) transmits an RRC Connection Reconfiguration message that includes information of the cell to which the transition is to be made, so as to instruct the handover (refer to, for example, Non-Patent Reference 3).

The UE, in accordance with the information included in the RRC Connection Reconfiguration, changes the setting of the wireless channel. When this is done, $P_{O\_PUSCH}(j)$, which is a parameter with regard to the power control, can be reset, and the accumulated value of f(i) is reset. PL is the calculation of the cell for the transition destination, by a measurement made at the time of the handover.

Prior Art Documents

Non-Patent Reference 1: 3GPP TS36.201 LTE Physical layer-General Description v8.1.0
Non-Patent Reference 2: 3GPP TS36.213 EUTRA Physical layer procedure v8.8.0
Non-Patent Reference 3: 3GPP TS36.331 V8.5.0

DISCLOSURE OF INVENTION

Problem to be Solved by the Invention

However, in the case of a Type2 RN, which does not have unique physical cell ID, there is no handover protocol such as shown in FIG. 10. Also, because a Type2 RN area is not distinguished from a donor eNB cell, it is not possible to transmit a unique parameter (for example, the RN transmission power) to a mobile station. For this reason, it is not possible to reset a parameter related to power control, and it is difficult to properly set the transmission power of a mobile station, that is, the uplink transmission power.

In general, the transmission power of an RN is smaller than that of a donor eNB, and the coverage area of an RN is smaller than that of a donor eNB. That is, the UE-RN propagation distance is often smaller than the eNB-UE propagation distance, and there are many cases in which, when transitioning from an eNB to an RN, the transmission power of the UE is excessive.

In reverse, when transitioning from an RN to an eNB, there are many cases in which the transmission power of the UE is insufficient.

Although by using a closed-loop TPC command to control the f(i) term in Equation (1), it is possible to gradually adjust the uplink transmission power to a proper value, with control that uses an absolute value, there is the problem that the range of setting value is not sufficient and also, if an accumulated value is used, time is required for convergence.

The present invention has been made in consideration of the above-noted problems and has as an object to provide a technique for controlling the power transmitted by a mobile station both properly and quickly, even in the case in which a unique parameter (for example, the RN transmission power) cannot be notified to the mobile station.

To solve the above-described problem, one aspect of the present invention is a wireless communication system including a base station, one or a plurality of relay stations associated with the base station, and one or a plurality of mobile stations; wherein, when the mobile station and the base station communicate without going through the relay station, the wireless communication system uses a first transmission power control method to control the transmission power of the mobile station, and, when the mobile station and the base station communicate via the relay station, the wireless communication system uses a second transmission power control method to control the transmission power of the mobile station.

In the wireless communication system, when the second transmission power control method is used to control the transmission power of the mobile station, in addition to a power control parameter used in the first transmission power control method for controlling the transmission power of the mobile station, another parameter responsive to the difference between the communication path quality between the mobile station and the base station and the communication path quality between the mobile station and the relay station may be used.

In the wireless communication system, the another parameter may be a parameter responsive to the difference between the received power at the base station with respect to the transmission from the mobile station and the received power at the relay station with respect to the transmission from the mobile station. In addition, the another parameter may be a parameter responsive to the difference between a propagation channel loss between the mobile station and the base station and a propagation channel loss between the mobile station and the relay station. In addition, the another parameter may be a parameter responsive to the difference between the SINR at the base station and the SINR at the relay station.

In the wireless communication system, in accordance with the result of comparing the difference between a propagation channel loss between the mobile station and the base station with respect to the transmission from the mobile station and a propagation channel loss between the mobile station and the relay station with respect to the transmission from the mobile station, with a prescribed threshold value, when the mobile station and the base station communicate, judgment may be done of whether or not to go through the relay station. In addition, the prescribed threshold value may adaptively change.

To solve the above-described problem, another aspect of the present invention is a base station device, wherein, when communication with a mobile station is performed without going through a relay station, a first transmission power control method is used to control the transmission power of the mobile station, and when communication with a mobile station is performed via the relay station, a second transmission power control method is used to control the transmission power of the mobile station.

To solve the above-described problem, another aspect of the present invention is a base station device including: communication path quality calculating means for calculating the difference between a communication path quality between a mobile station and the base station device and communication path quality between the mobile station and the relay station; comparing means for comparing the difference in a communication path quality calculated by the communication path quality calculation means with a prescribed threshold value; and a parameter notification means for notifying the mobile station of a parameter responsive to the difference in the communication path quality calculated by the communication path quality calculation means in accordance with the results compared by the comparing means.

To solve the above-described problem, another aspect of the present invention is a mobile station device; wherein, when communication with a base station is performed without going through a relay station, a first transmission power control method is used to control the transmission power, and when communication with a base station is performed via a relay station, a second transmission power control method is used to control the transmission power.

To solve the above-described problem, another aspect of the present invention is a wireless communication method between a base station, one or a plurality of relay stations associated with the base station, and one or a plurality of mobile stations; wherein, when the mobile station and the base station communicate without going through the relay station, the wireless communication method uses a first transmission power control method to control the transmission power of the mobile station, and, when the mobile station and the base station communicate via the relay station, the wireless communication method uses a second transmission power control method to control the transmission poser of the mobile station.

Effect of the Invention

According to the present invention, in a mobile communication system having a relay station in addition to a base station and a mobile station, it is possible to properly control the uplink transmission power of the mobile station.

BRIEF DESCRIPTION OF THE DRAWINGS

FIG. 1 is a conceptual drawing of a mobile communication system in which an uplink transmission power control method according to an embodiment of the present invention is applied.

FIG. 2 is a block diagram showing an example of a mobile station using the uplink transmission power control method of an embodiment of the present invention.

FIG. 3 is a block diagram showing an example of a base station using the uplink transmission power control method of an embodiment of the present invention.

FIG. 4 is a block diagram showing an example of a relay node (RN) using the uplink transmission power control method of an embodiment of the present invention.

FIG. 5 is a flowchart showing an example of the operation of the mobile station, the base station device, and the RN.

FIG. 6 is another flowchart showing an example of the operation of the mobile station, the base station device, and the RN.

FIG. 7 is yet another flowchart showing an example of the operation of the mobile station, the base station device, and the RN.

FIG. 8 is yet another flowchart showing an example of the operation of the mobile station, the base station device, and the RN.

FIG. 9 is a drawing for describing the conventional art.

FIG. 10 is a drawing for describing the conventional art.

BEST MODE FOR CARRYING OUT THE INVENTION

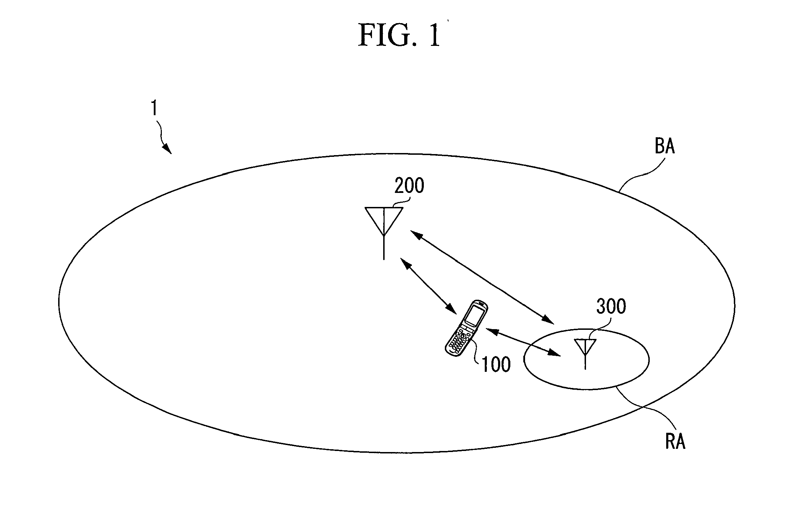

An embodiment of the present invention will be described below, with references made to the drawings. FIG. 1 is a conceptual drawing of a wireless communication system 1 in which an uplink transmission power control method according to an embodiment of the present invention is applied. The wireless communication system 1, as shown in FIG. 1, has a mobile station 100, a base station 200, and an RN 300. The RN 300 is a relay station between the mobile station 100 and the base station 200.

In the wireless communication system 1, there is a communication mode (called one-hop) in which the mobile station 100 is positioned within the area BA of the base station 200, in which direct communication is possible by the mobile station 100 and the base station 200 without going through the RN 300, and a communication mode (called two-hop) in which the mobile station 100 is positioned in the area RA of the RN 300 placed within the area of the base station 200, in which the mobile station 100 and the base station 200 communicate through the RN 300. The connection between the RN 300 and the base station 200 may be a wired connection and may be a wireless-type connection. The RN 300 may be installed, for example, in a weak field strength environment, such as within a building or underground, or in an environment in which there is a concentration of users.

Although as a convenience one base station 200 is shown in FIG. 1, the wireless communication system 1 may have a plurality of base stations 200. Also, although there are one RN 300 and one mobile station 100 noted within the area of the base station 200 in FIG. 1, a plurality of RNs 300 and a plurality of mobile stations 100 may exist within the area of the base station 200. That is, the constitution may be one in which a plurality of RNs 300 are placed under one base station 200, in other words, one in which a plurality of RNs 300 are associated with one base station 200, or one in which a plurality of mobile stations 100 are within the area of the base station 200 or within the area of an RN 300. Placing a plurality of RNs 300 within the area of one base station 200 has the same effect as disposing many cells having small areas, thus achieving the effect of increasing the number of mobile stations accommodated with a given unit of surface area. Additionally, by using RNs 300 rather than eNBs, it is possible achieve a low cost for installation and operation.

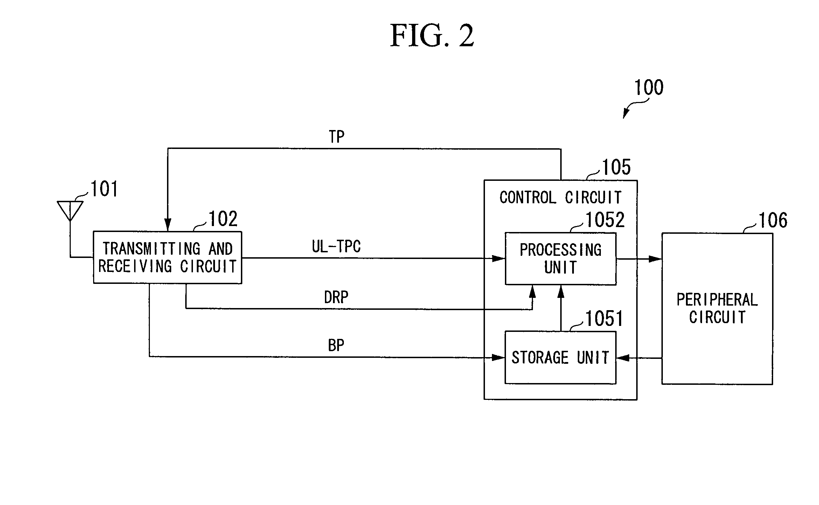

FIG. 2 is a block diagram showing an example of the mobile station 100. As shown in FIG. 2, the mobile station 100 has a transmitting and receiving antenna 101, a transmitting and receiving circuit 102, a control circuit 105, and a peripheral circuit 106. The control circuit 105 has a storage unit 1051 and a processing unit 1052.

The transmitting and receiving antenna 101 has a function of radiating radio waves with a prescribed gain in a frequency band used by the mobile station 100.

The transmitting and receiving circuit 102 has a function of transmitting and receiving a wireless signal, via the transmitting and receiving antenna 101. The transmitting and receiving circuit 102 also has a function of amplifying a received signal to a prescribed power value.

The transmitting and receiving circuit 102 has a function of converting the amplified received signal to a baseband signal. The transmitting and receiving circuit 102 also has a function of outputting the baseband-converted signal to the control circuit 105. The transmitting and receiving circuit 102 has a function of converting the baseband signal input from the control circuit 105 to a transmitting signal in the wireless frequency band. The transmitting and receiving circuit 102 has a function of inputting a transmission power control signal TP input from the control circuit 105. The transmitting and receiving circuit 102 has a function of amplifying the transmitting signal to a prescribed power value, in accordance with the transmission power control signal input from the control circuit 105 and transmitting this as a wireless signal via the transmitting and receiving antenna 101.

The control circuit 105 has a function of processing the baseband signal input from the transmitting and receiving circuit 102. The control circuit 105 has a function of outputting the processed signal to the peripheral circuit 106. For example, the control circuit 105, with regard to a baseband signal input from the transmitting and receiving circuit 102, performs demodulation and decoding and digital/analog conversion to convert it to a voice signal and output it to the peripheral circuit 106. The control circuit 105 has a function of processing the signals input from each peripheral circuit. The control circuit 105 has a function of outputting the processed baseband signal to the transmitting and receiving circuit 102. For example, the control circuit 105 performs processing to analog/digital convert, encode, modulate, and convert to a baseband signal a voice input from the peripheral circuit 106, and output the result to the transmitting and receiving circuit 102.

The storage unit 1051 of the control circuit 105 stores the base station specific parameter signal BP (the $M_{PUSCH}$ (i) PO_PUSCH(j), $\alpha$(i) and the like in the above-noted Equation (1)) input from the transmitting and receiving circuit 102, and also stores ahead of time a parameter to be stored at the mobile station side ($\Delta_{TF}$(i) and the like in the above-noted Equation (1)).

The processing unit 1052 of the control circuit 105 calculates the downlink propagation channel loss (PL) from the received power value (DRP) of the reference signal of the base station 200 input from the transmitting and receiving circuit 102, and the transmission power value of the reference signal of the base station 200 that was received beforehand and stored in the storage unit 1051, reads out various parameters that were stored in the storage unit 1051 beforehand, and calculates the transmission power TP (for example, the transmission power according to Equation (2), which will be described later) of the uplink that is determined by the system.

The peripheral circuit 106 has various circuits that control a display unit (not shown) and a speaker (not shown) or the like. For example, the peripheral circuit 106 has a function that, based on a voice signal input from the control circuit 105, causes output of a voice from a speaker of a handset receiver unit. Also, for example, the peripheral circuit 106 has a function of inputting a voice from a handset microphone and outputting the input voice signal to the control circuit 105.

Also, for example, the peripheral circuit 106 has a function of displaying various information on a display unit in accordance with instructions from the control circuit 105. Although one peripheral circuit 106 is shown in FIG. 2, the mobile station 100 may have a plurality of peripheral circuits 106.

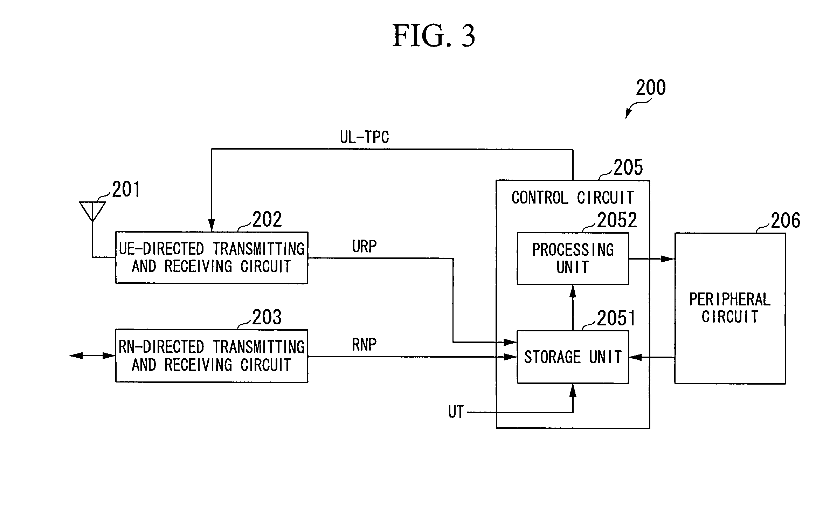

FIG. 3 is a block diagram showing an example of the constitution of the base station 200. As shown in FIG. 3, the base station 200 has a transmitting and receiving antenna 201, a UE-directed transmitting and receiving circuit 202, a RN-directed transmitting and receiving circuit 203, a control circuit 205, and a peripheral circuit 206. The control circuit 205 has a storage unit 2051 and a processing unit 2052.

The transmitting and receiving antenna 201 has a function of radiating and receiving radio waves with a prescribed gain in a frequency band used by the base station 200.

The UE-directed transmitting and receiving circuit 202 has a function of receiving a wireless signal via the transmitting and receiving antenna 201. The UE-directed transmitting and receiving circuit 202 also has a function of amplifying the received signal to a prescribed power value. The UE-directed transmitting and receiving circuit 202 also has a function of converting the amplified received signal to a baseband signal. The UE-directed transmitting and receiving circuit 202 also has a function of outputting the baseband-converted signal to the control circuit 205. The UE-directed transmitting and receiving circuit 202 also has a function of converting the baseband signal input from the control circuit 205 to a transmitting signal in the wireless frequency band. The UE-directed transmitting and receiving circuit 202 also has a function of inputting an uplink transmission power control signal (UL-TPC signal) input from the control circuit 205. The UE-directed transmitting and receiving circuit 202 also has a function of inserting the uplink transmission power control signal (UL-TPC) input from the control circuit 205 into the downlink control channel PDCCH, in accordance with a format established by the system, amplifying the transmitting signal along with other signals to a prescribed power value and transmitting the result as a wireless signal, via the transmitting and receiving antenna 201. The UE-directed transmitting and receiving circuit 202 also has a function of measuring the received power with respect to the transmitting signal of the mobile station 100.

The RN-directed transmitting and receiving circuit 203 has a function of performing transmission and reception of control signal and data signals with the RN 300. In the case in which the RN 300 and the base station 200 are connected by wireless, the UE-directed transmitting and receiving circuit 202 may be constituted to function also as the RN-directed transmitting and receiving circuit 203.

The control circuit 205 has a function of processing the baseband signal input from the UE-directed transmitting and receiving circuit 202. The control circuit 205 also has a function of outputting the processed signal to the peripheral circuit 206. For example, the control circuit 205 converts the baseband signal input from the UE-directed transmitting and receiving circuit 202 and outputs the result to the peripheral circuit 206. The control circuit 205 also has a function of processing signals input from each peripheral circuit. The control circuit 205 also has a function of outputting the processed baseband signal to the UE-directed transmitting and receiving circuit 202. For example, the control circuit 205 converts the signal input from the peripheral circuit 206 to a baseband signal and outputs the result to the UE-directed transmitting and receiving circuit 202.

The storage unit 2051 of the control circuit 205 stores the received power RRP of the transmitting signal of the mobile station 100 that was measured at the RN 300 input from the RN-directed transmitting and receiving circuit 203.

The processing unit 2052 of the control circuit 205 compares the received power URP measured by the UE-directed transmitting and receiving circuit 202 with the received power target value UT and generates an uplink transmission power signal (UL-TPC signal). The processing unit 2052, from the received power value URP with respect to the transmission power of the mobile station input from the UE-directed transmitting and receiving circuit 202 and the received power value RRP of the transmitting signal of the mobile station 100 measured at the RN 300 that was received and stored in the storage unit 2051 ahead of time, calculates the propagation channel loss at the base station 200 with respect to the transmission of the same mobile station 100 and the difference in propagation channel loss at the RN 300 (a difference if the propagation channel loss is converted to dBm and a ratio if it is converted to W).

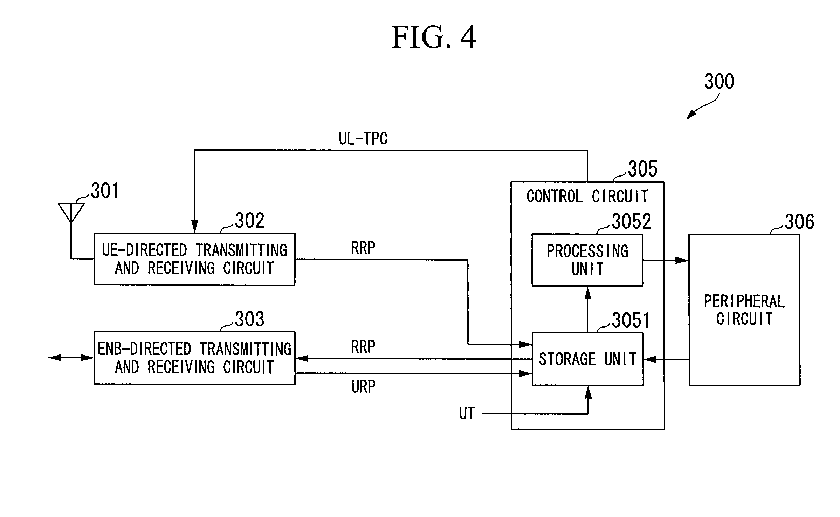

FIG. 4 is a block diagram showing an example of the constitution of the RN 300. As shown in FIG. 4, the RN 300 has a transmitting and receiving antenna 301, a UE-directed transmitting and receiving circuit 302, an eNB-directed transmitting and receiving circuit 303, a control circuit 305, and a peripheral circuit 306. The control circuit 305 has a storage unit 3051 and a processing unit 3052.

The transmitting and receiving antenna 301 has a function of radiating and receiving radio waves with a prescribed gain in a frequency band used by the RN 300.

The UE-directed transmitting and receiving circuit 302 has a function of receiving a wireless signal via the transmitting and receiving antenna 301. The UE-directed transmitting and receiving circuit 302 also has a function of amplifying the received signal to a prescribed power value. The UE-directed transmitting and receiving circuit 302 also has a function of converting the amplified received signal to a baseband signal. The UE-directed transmitting and receiving circuit 302 also has a function of outputting the converted baseband signal to the control circuit 305. The UE-directed transmitting and receiving circuit 302 also has a function converting the baseband signal input from the control circuit 305 to a transmitting signal in a wireless frequency band. The UE-directed transmitting and receiving circuit 302 also has a function of measuring the received power with respect to the transmitting signal of the mobile station.

The eNB transmitting and receiving circuit 303 has a function of transmitting and receiving control signals and data signals with the base station 200. In the case in which the RN 300 and the base station 200 are connected by wireless, the UE-directed transmitting and receiving circuit 302 may be constituted to function also as the eNB-directed transmitting and receiving circuit 303.

The control circuit 305 has a function of processing the baseband signal input from the UE-directed transmitting and receiving circuit 302. The processing of the baseband signal includes processing to demodulate, decode, and digital/analog convert the baseband signal. The control circuit 305 also has a function of outputting the processed signal to the peripheral circuit 306. For example, the control circuit 305 converts the baseband signal input from the UE-directed transmitting and receiving circuit 302 and outputs the result to the peripheral circuit 306. The control circuit 305 also has a function of processing the signals input from each peripheral circuit. The processing of a signal from a peripheral circuit includes processing for analog/digital conversion, encoding, and modulation. The control circuit 305 also has a function of outputting the processed baseband signal to the UE-directed transmitting and receiving circuit 302. For example, the control circuit 305 converts the signal input from the peripheral circuit 306 and outputs the result to the UE-directed transmitting and receiving circuit 302.

The processing for analog/digital conversion and digital/analog conversion includes, for example, sampling a voice signal at a sampling rate of 8 kHz and converting it to a digital signal or, in reverse, converting a digital signal to a voice signal. The encoding and decoding processing includes, for example, processing for turbo encoding with an encoding rate of 1/3, or processing for decoding using a Max-Log-MAP algorithm. The modulation and demodulation includes, for example, mapping a bit stream onto a signal using 16QAM signal points or using soft-decision decoding that converts the baseband signal to a bit stream that include likelihood information.

The storage unit 3051 of the control circuit 305 stores the received power URP of the transmitting signal of the mobile station 100 that was measured at the base station 200 and input from eNB-directed transmitting and receiving circuit 303.

The processing unit 3052 of the control circuit 305 compares the received power RRP measured at the UE-directed transmitting and receiving circuit 302 with the received power target value UT and generates an uplink transmission power signal (UL-TPC signal).

Continuing, the uplink transmission power control method according the first embodiment of the present invention will now be described. In the case of the communication mode (one-hop) in which the mobile station 100 is within the area of the base station 200, in which direct communication is possible between the base station 100 and the base station 200 without going through the RN 300, the processing unit 2052 of the base station 200 compares the received power of the base station 200 with the received power target value and generates an uplink transmission power signal (UL-TPC signal) with respect to the mobile station 100. The UE-directed transmitting and receiving circuit 202 of the base station 200 transmits the uplink transmission power signal (UL-TPC signal) generated by the processing unit 2052 to the mobile station 100 using the downlink control channel PDCCH.

In the case in which the mobile station 100 is within the area of the RN 300, in the mode (two-hop) in which the mobile station 100 and the base station 200 communicate via the RN 300, the processing unit 3052 of the RN 300 compares the received power of the RN 300 with the received power target value, and generates an uplink transmission power signal (UL-TC signal) with respect to the mobile station 100. The UE-directed transmitting and receiving circuit 302 of the RN 300 transmits the uplink transmission power signal (UL-TPC signal) generated by the processing unit 3052 to the mobile station 100 via the downlink control channel.

In the case of either the one-hop or the two-hop, in the mobile station 100 the transmitting and receiving circuit 102 extracts the uplink transmission power signal (UL-TPC signal) and supplies it to the processing unit 1052. The processing unit 1052 uses the uplink transmission power signal (UL-TPC signal) and a parameter stored in the storage unit 1051 ahead of time to decide the uplink transmission signal power, in accordance with the following Equation (2).

$$P_{\text{PUSCH}}(i) = \min\{ P_{\text{CMAX}}, 10 \log_{10}(M_{\text{PUSCH}}(i)) + P_{\text{O\_PUSCH}}(j) + \alpha(j) \cdot PL + \Delta_{\text{TF}}(i) + f_2(i) \}$$

$$[\mathrm{d\,B\,m}] \cdots (2)$$

The above-noted Equation (2) will be described in comparison with the Equation (1). The meaning of the left side and each of the terms on the right side in Equation (2) are the same as the Equation (1), with the exception of the meaning of the final term "$f_2(i)$" on the right side of Equation (2). The PL (propagation channel loss) calculated in the mobile station 100 in Equation (2), similar to the case of Equation (1), uses the propagation channel loss between the base station 200 and the mobile station 100, in both cases of one-hop and two-hop. In the case of two-hop, the reason the propagation channel loss between the RN 300 and the mobile station 100 is not used as the PL (the propagation channel loss) is that, in the case in which a cell-specific reference signal (CRS) is not transmitted from the RN 300 for the purpose of measuring the PL (propagation channel loss), in the mobile station 100 it becomes difficult to measure the PL (propagation channel loss) between the RN 300 and the mobile station 100.

The term $f_2(i)$ is the term of the closed-loop transmission power using the uplink transmission power signal (UL-TPC signal). That is, it is the transmission power correction value. The term $f_2(i)$ differs between the case of one-hop and the case of two-hop. In the case of one-hop, f(i), which is the power control term in the above-noted Equation (1), as shown in the control Equation (3) below, is used as $f_2(i)$. In the case of two-hop, f(i) of the above-noted Equation (1) with a correction value ($-PL_{RN}$) that is the case of the two-hop added to it is used as $f_2(i)$, as shown in the control Equation (4) below. The reason the two-hop correction value ($-PL_{RN}$) is added is that there is a great difference in the required uplink transmission power between the case of one-hop and the case of two-hop. The term f(i) is controlled based on the received power at the RN 300.

$$f_2(i) = f(i) \quad \dots (3):$$

The one-hop case

$$f_2(i) = f(i) - PL_{RN} \quad \dots (4):$$

The two-hop case

The switching between the above-noted control equations (3) and (4) may be done in the mobile station 100 and may be done at the NW side (base station 200 or RN 300 side). For example, in the case of a TPC that uses an absolute value, $f_2(i)$ is calculated at the NW side, and notification thereof is given to the mobile station 100 as the TPC command (the $f_z(i)$ calculation being equivalent to switching). In this case, the mobile station 100 can operate in accordance with the TPC command, without taking into consideration the switching of the above-noted control equations. Also, for example, in the case of a TPC that uses an accumulated value, when switching is done, a TPC command that includes $+PL_{RN}$ and $-PL_{RN}$ is notified to the mobile station 100 (the selection of $+PL_{RN}$ or $-PL_{RN}$ being equivalent to switching). In this case, the NW side makes notification of the correction value ($PL_{RN}$) and an instruction for the switching of the above-noted control equations, or alternatively, makes notification of the correction value ($PL_{RN}$) as the instruction for the switching of the above-noted control equations, the mobile station 100 switching the above-noted control equations.

Stated in different terms, to perform transmission power control of the mobile station 100 in the wireless communication system 1, the above-noted control Equation (3), which is a first transmission power control method, is used when the mobile station 100 and the base station 200 communicate without going through the RN 300, and the above-noted control Equation (4), which is a second transmission power control method, is used when the mobile station 100 and the base station 200 communicate via the RN 300. Also, when performing transmission power control of the mobile station 100 by using the above-noted control Equation (4), which is the second transmission power control method, in addition to the power control parameter (f(i)) used when performing transmission power control of the mobile station 100 using the above-noted control Equation (3), which is the first transmission power control method, another parameter ($PL_{RN}$) is used. The correction value ($PL_{RN}$), which is the other parameter is a parameter responsive to the difference between the communication path quality between the mobile station 100 and the base station 200 and the communication path quality between the mobile station 100 and the RN 300, and this will be described later.

A specific example will now be explained. The RN 300 acquires from the base station 200 ahead of time information regarding a plurality of mobile stations 100 that are positioned within the area of the base station 200, monitors the transmitted signals of each mobile station 100, measures the received power, and notifies the base station 200 of the received power at the RN 300 with respect to the transmission from the mobile station 100, via the eNB transmitting and receiving circuit 302. The base station 200 measures the received power at the base station 200 with respect to the transmission from the mobile station 100, and stores this in the storage unit 2051. The RN 300 in this case is a Type2, which does not have a unique physical cell ID.

With the transmission power of the mobile station 100 as $P_{UETX}$ [dBm], the received power at the base station 200 as $P_{eNB, UETX}$ [dBm], the received power at the RN 300 as $P_{RN, UETX}$ [dBm], the propagation channel loss from the mobile station 100 to the base station 200 as $PL_{UE-eNB}$ [dB], and the propagation channel loss from the mobile station 100 to the RN 300 as $PL_{UE-RN}$ [dB], the relationships expressed by the following Equations (5) and (6) obtain.

$$P_{eNB, UETX} = P_{UETX} - PL_{UE-eNB} \quad \ldots (5)$$

$$P_{RN, UETX} = P_{UETX} - PL_{UE-RN} \quad \ldots (6)$$

The case in which the mobile station 100 approaches the RN 300 from the area of the base station 200 (when a change is made from one-hop to two-hop) will be described.

The processing unit 2052 of the base station 200 periodically or as required, calculates the difference between the propagation channel loss from the mobile station 100 to the base station 200 and the propagation channel loss from the mobile station 100 to the RN 300 ($PL_{UE-eNB}$ - $PL_{UE-RN}$) in accordance with above-noted Equations (5), (6) and Equation (7) below. By the base station 200 by notifying the RN 300 of the value of $P_{eNB, UETX}$, the processing unit 3052 of the RN 300 may calculate the difference between the propagation channel losses instead of the processing unit 2052 of the base station 200.

$$PL_{UE-eNB} - PL_{UE-RN} = P_{RN, UETX} - P_{eNB, UETX} \quad \ldots (7)$$

When the mobile station 100 and the base station 200 come to communication via the RN 300 (when a change is made to two-hop), the base station 200, in accordance with Equation (8) below, calculates the correction value ($PL_{RN}$). As shown by Equation (7) above, because the correction value ($PL_{RN}$) is a difference in propagation channel losses, it may be calculated by either Equation (7) above or Equation (8) above.

$$PL_{RN} = P_{RN, UETX} - P_{eNB, UETX} \quad \ldots (8)$$

That is, when the above-noted control Equation (4), which is the second transmission power control method, is used to control the transmission power of the mobile station 100, in addition to the power control parameter (f(i)) used when performing transmission power control of the mobile station 100 using the above-noted control Equation (3), which is the first transmission power control method, another parameter ($PL_{RN}$) is used that is responsive to the difference ($P_{RN, UETX}$ - $P_{eNB, UETX}$) between the received power (pen, $_{UETX}$) at the base station 200 with respect to the transmission of the mobile station 100 and the received power ($P_{RN, UETX}$) at the RN 300 with respect to the transmission of the mobile station 100.

The base station 200 that calculated the correction value ($PL_{RN}$) uses the threshold value $T_{RN-in}$ to judge the location moving from the area of the base station 200 to the area of the RN 300. Specifically, when the correction value ($PL_{RN}$) is at least the threshold value $T_{RN-in}$, the base station 200 judges that the mobile station 100 has come into the area of the RN 300.

Furthermore, the $T_{RN-in}$ (and similarly $T_{RN-out}$, which will be described later) may be a value determined by simulation or field testing beforehand, and may be a value that is updated adaptively. For example, if $T_{RN-in}$ is varied in response to traffic in the service area of the base station 200, it is possible to control the coverage area of the RN 300.

Having judged that the mobile station 100 has come into the area of the RN 300, the base station 200 passes control of the transmission power of the mobile station 100 to the RN 300, and a transition is made from transmission power control by the base station 200 that does not consider the difference in propagation channel loss to transmission power control by the RN 300 that considers the difference in propagation channel loss.

Specifically, the base station 200, in accordance with the above-noted control Equation (4) instead of the above-noted control Equation (3), calculates $f_2(i)$ and notifies the mobile station 100 via the RN 300 of a TPC command that includes $f_2(i)$. Based on the notified $f_2(i)$, the mobile station 100 controls the uplink transmission power. In this manner, after transitioning from the one-hop mode to the two-hop mode, it is possible to properly control the uplink transmission power of the mobile station 100.

The base station 200 may, instead of calculating $f_2(i)$, notify the mobile station 100. via the RN 300, of a TPC command that includes an instruction to the effect that $f_2(i)$ should be calculated in accordance with the above-noted control Equation (4). In this case, the mobile station 100 calculates $f_2(i)$ in accordance with the above-noted control Equation (4), instead o the above-noted control Equation (3), and controls the uplink transmission power based on the calculated $f_2(i)$.

The case in which the mobile station 100 leaves the area of the RN 300 (when a change is made from the two-hop mode to the one-hop mode) will now be described.

The processing unit 2052 of the base station 200, similar to the case in which the mobile station 100 approaches the RN 300 from the area of the base station 200, calculates the correction value ($PL_{RN}$).

The base station 200 that calculated the correction value ($PL_{RN}$) uses the threshold value $T_{RN-out}$ to determine the location moving from the area of the RN 300 to the area of the base station 200. That is, when the correction value ($PL_{RN}$) is no greater than the threshold value $T_{RN-out}$, the base station 200 judges that the mobile station 100 has come into the area of the base station 200.

The base station 200 that judged that the mobile station 100 has entered the area of the base station 200 requests the RN 300 to return transmission power control of the mobile station 100, and a transition is made from transmission power control by the RN 300 that considers the difference in propagation channel loss to transmission power control by the base station 200 that does not consider the difference in propagation channel loss.

Specifically, the base station 200, in accordance with the above-noted control Equation (3) instead of the above-noted control Equation (4), calculates $f_2(i)$ and notifies the mobile station 100 of a TPC command that includes $f_2(i)$. Based on the notified $f_2(i)$, the mobile station 100 controls the uplink transmission power. The base station 200 may notify the mobile station 100 of a TPC command that includes an instruction to the effect that $f_2(i)$ should be calculated in accordance with the above-noted control Equation (3) instead of calculating $f_2(i)$. In this case, the mobile station 100 calculates $f_2(i)$ in accordance with the above-noted control Equation (3) instead of the above-noted control Equation (4), and controls the uplink transmission power based on the calculated $f_2(i)$. In this manner, after transitioning from the one-hop mode to the two-hop mode, it is possible to properly control the uplink transmission power of the mobile station 100.

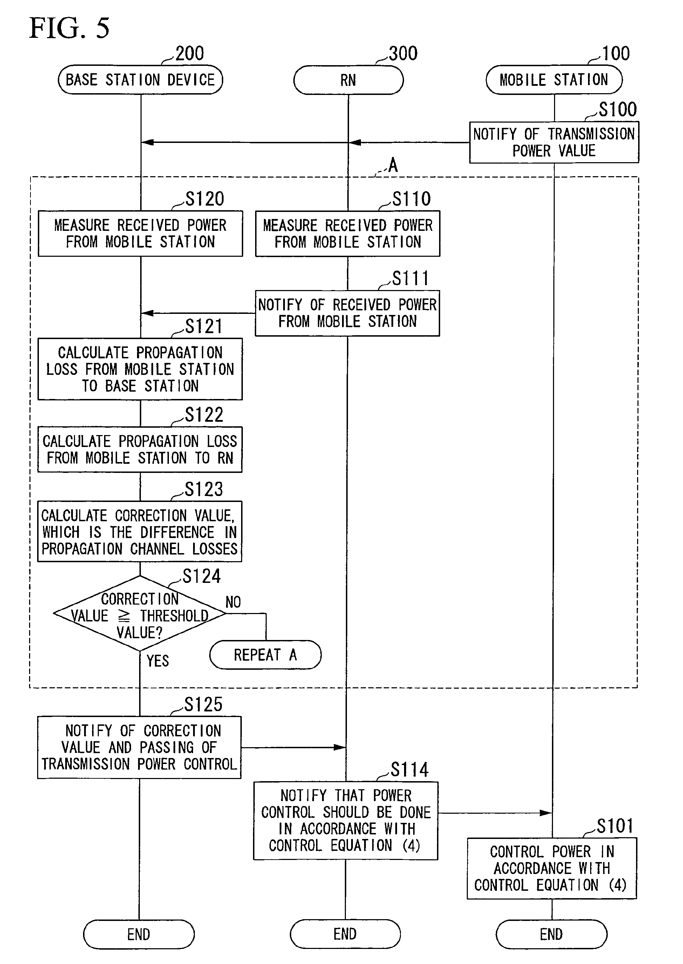

FIG. 5 is a flowchart of an example of the operation in the case in which the mobile station 100 approaches the area of the RN 300 (change from one-hop to two-hop). In FIG. 5, the mobile station 100 notifies the base station 200 and the RN 300 of the transmission power value (step S100). The RN 300 receives the transmission power value from the mobile station 100 and measures the received power ($P_{RN,\ UETX}$) from the mobile station 100 (step S110). The base station 200 receives the transmission power value from the mobile station 100 and measures the received power ($Pe_{NB,UETX}$) from the mobile station 100 (step S120).

After step S110, the RN 300 notifies the base station 200 of the measured received power ($P_{RN,UETX}$) from the mobile station 100 (step S111).

After step S120, the base station 200, from the transmission power value received from the mobile station 100 and the measured received power ($Pe_{NB,UETX}$) from the mobile station 100, calculates the propagation channel loss ($PL_{UE-eNB}$) from the mobile station 100 to the base station 200 (step S121)

After step S121, the base station 200, from the transmission power value received from the mobile station 100 and the received power ($P_{RN,UETX}$) from the mobile station 100 received from the RN 300, calculates the propagation channel loss ($P_{UE-RN}$) from the mobile station 100 to the RN 300 (step S122).

After step S122, the base station 200 calculates the correction value ($PL_{RN}$), which is the difference between the propagation channel losses ($P_{RN,\ UETX} - P_{eNB,\ UETX}$) (step S123). Next, the base station 200 determines whether or not the correction value ($PL_{RN}$), which is the difference between the propagation channel losses ($P_{RN,\ UETX} - P_{eNB,\ UETX}$), is at least the threshold value $T_{RN-in}$ (step S124).

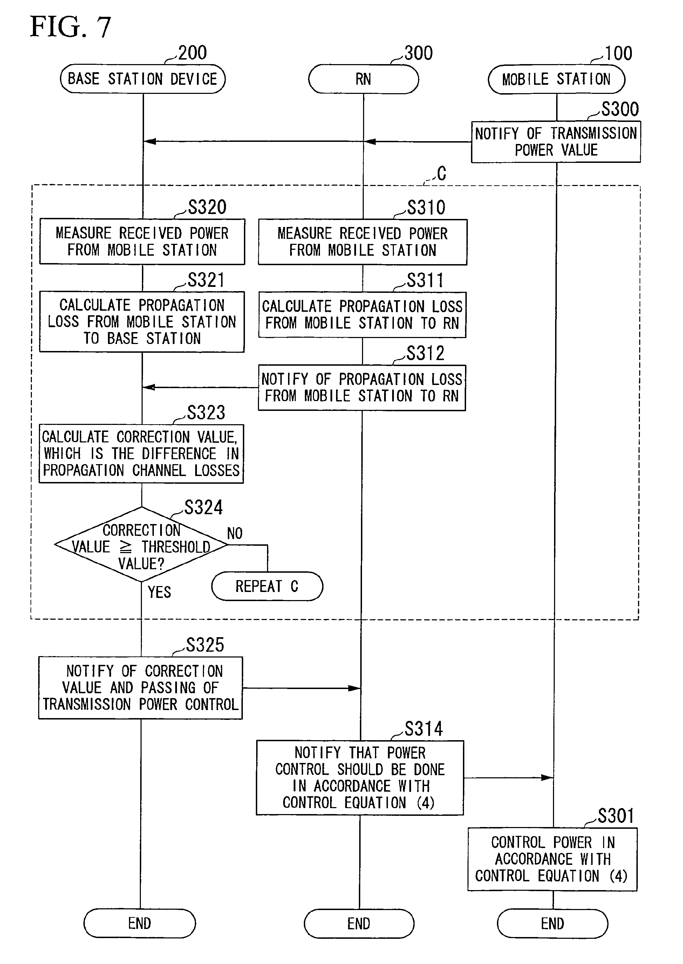

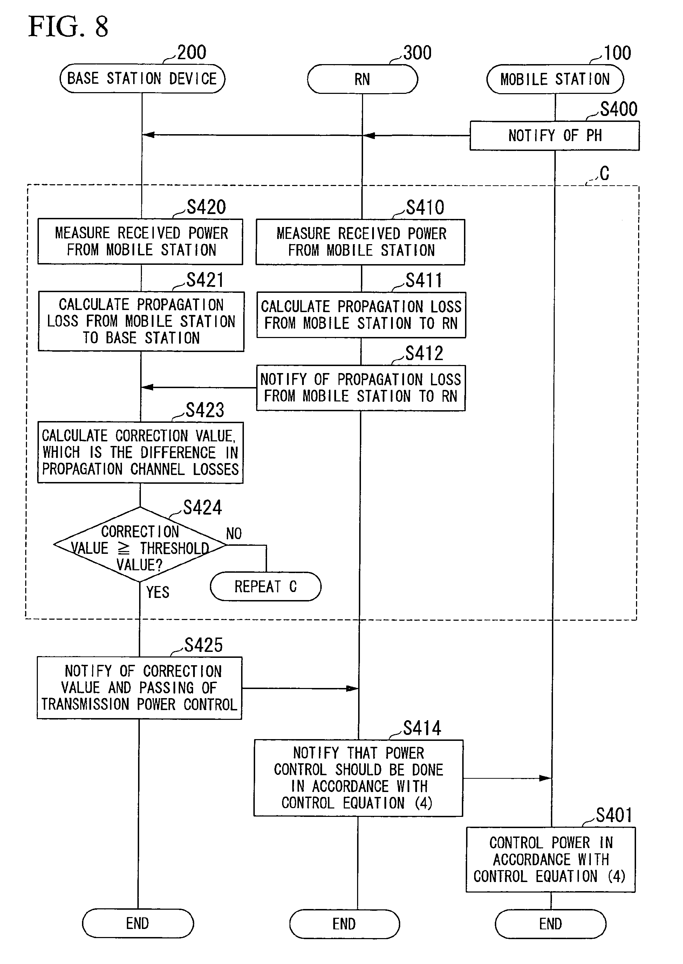

In the case in which the base station 200 judges that the correction value ($PL_{RN}$), which is the difference between the propagation channel losses ($P_{RN,\ UETX} - P_{eNB,\ UETX}$), is not at least the threshold value $T_{RN-in}$ (no at step S124), the RN 300 returns to step S110 and the base station 200 returns to step S120. That is, in FIG. 5, the processing within the broken line A (processing when the mobile station 100 is within the area of the base station 200, this being the same for the processing within the broken line C in FIG. 7 and the processing within the broken line D in FIG. 8) is repeated.

In the case in which the base station 200 judges that the correction value ($PL_{RN}$), which is the difference between the propagation channel losses ($P_{RN, UETX}$ - $P_{eNB, UETX}$) is at least the threshold value $T_{RN-in}$ (yes at S124), the correction value ($PL_{RN}$) is stored as $PL_{RN-in}$ and at least a notification is made to the RN 300 to the effect that $PL_{RN-in}$ and the transmission power control of the mobile station 100 is being passed to the RN 300 (step S125).

The RN 300 that receives the above-noted notification notifies the mobile station 100 to the effect that power control should be performed in accordance with notified $PL_{RN-in}$ and the above-noted control Equation (4) (step S114). In this manner, it is possible to lower the transmission power of the mobile station 100 and perform proper control, so that the transmission power does not become excessive. Also, the RN 300 may make a notification to the effect that the transmission power should be lowered by the amount of the $PL_{RN-in}$ value.

The mobile station 100 that received the above-noted notification, with the notified $PL_{RN-in}$ as $PL_{RN}$ and in accordance with the above-noted control Equation (4), controls the uplink transmission power (S101). That is, operation is done so as to lower the transmission power by the amount of $PL_{RN-in}$. By doing this, because the received power at the RN 300 with respect to transmission of the mobile station 100 becomes a power that is substantially equal to the received power at the base station 200 with respect to the transmission of the mobile station 100, it is possible to avoid the mobile station 100 continuing to transmit to the RN 300 with an excessive power. Also, while the mobile station 100 is within the area of the RN 300, it calculates $f_2(i)$ in accordance with the above-noted control Equation (4).

The correction value ($PL_{RN}$) may be updated in as necessary. When this is done, f(i) is a value that is decided by an algorithm that is similar to that for f(i) at the base station 200, in accordance with the received power (and receiving quality) at the RN 300 (if the power control signal is calculated from the received power at the RN 300, it may either the base station 200 or the RN 300 that decides f(i), and it may be either the mobile station 200 or the RN 300 that actually transmits the UL-TPC signal in accordance with f(i)).

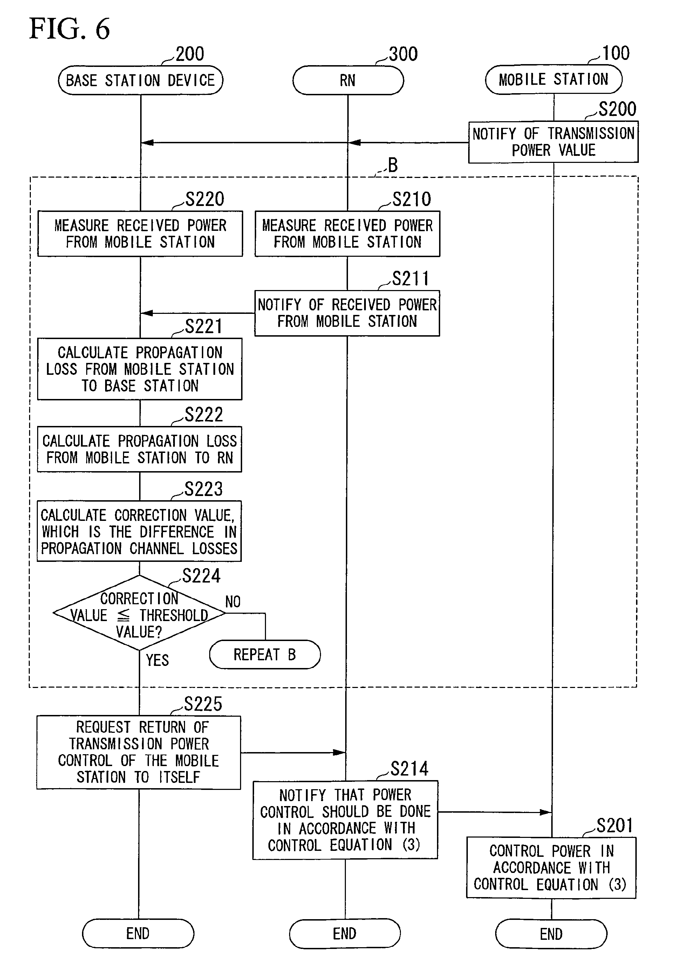

FIG. 6 is a flowchart showing an example of the operation in the case in which the mobile station 100 moves away from the area of the RN 300 (change from two-hop to one-hop). In FIG. 6, because the steps S200, S210, S211, S220, S221, S222, and S223 are the same, respectively, as steps S100, S110, S111, S120, S121, S122, and S123 in FIG. 5, descriptions thereof are omitted.

Following step S233, the base station 200 judges whether or not the correction value ($PL_{RN}$), which is the difference between the propagation channel losses ($P_{RN, UETX}$ - $P_{eNB, UETX}$) is no greater than the threshold value $T_{RN-out}$ (step S224).

In the case in which the mobile station 200 judges that the correction value ($PL_{RN}$), which is the difference between the propagation channel losses ($P_{RN, UETX}$ - $P_{eNB, UETX}$) exceeds the threshold value $T_{RN-out}$ (no at step S224), the RN 300 returns to step S210, and the base station 200 returns to step S220. That is, the processing within the broken line B in FIG. 6 (processing when the mobile station 100 is within the area of the RN 300) is repeated.

In the case in which the mobile station 200 judges that the correction value ($PL_{RN}$), which is the difference between the propagation channel losses ($P_{RN, UETX}$ - $P_{eNB, UETX}$) is no greater than the threshold value $T_{RN-out}$ (yes at step S224), a request is made to the RN 300 to return the transmission power control of the mobile station 100 to itself (step S225).

The RN 300 that received the above-noted notification notifies the mobile station 100 to the effect that power control should be done in accordance with the above-noted control Equation (3) (step S214). The RN 300 may make notification to the effect that the transmission power should be increased by an amount of the $PL_{RN-in}$ value.

The mobile station 100 that received the above-noted notification controls the uplink transmission power in accordance with the above-noted control Equation (3) (step S220). That is, operation is done so as to increase the transmission power by an amount of the $PL_{RN-in}$ value. By doing this, it is possible to increase the transmission power of the mobile station 100 with respect to the base station 200, which had been excessively small. The mobile station 100, when located within the area of the base station 200, calculates $f_2(i)$ in accordance with the above-noted control Equation (3).

FIG. 7 is a flowchart showing an example of the operation in the case in which the mobile station 100 approaches the area of the RN 300. In FIG. 6, because the steps S300, S301, S310, S314, S320, S321, S323, S324, and S325 are the same, respectively, as steps S100, S101, S110, S114, S120, S121, S123, S124, and S125 in FIG. 5, descriptions thereof are omitted.

Following step S310, the RN 300, from the transmission power value received from the mobile- station 100 and the measured received power ($P_{RN, UETX}$) from the mobile station 100, calculates the propagation channel loss ($PL_{UE-RN}$) from the mobile station 100 to the RN 300 (step S311). Next, the RN 300 notifies the base station 200 of the calculated propagation channel loss ($PL_{UE-RN}$) from the mobile station 100 to the RN 300 (step S312).

In the operation of FIG. 7 as well, it is possible to achieve the same effect as the operation of FIG. 5. Even in the case in which the mobile station 100 moves away from the area of the RN 300, the RN 300 may calculate the propagation channel loss ($PL_{UE-RN}$) from the mobile station 100 to the RN 300 and notify the base station 200 thereof.

FIG. 8 is a flowchart showing another example of the operation in the case in which the mobile station 100 approaches the area of the RN 300. Specifically, in the flowchart shown in FIG. 8, the example is one in which the difference in propagation channel losses is calculated in the mobile station 100 based on the PH (power headroom).

The PH is the difference between the maximum transmission power $P_{MAX}$ established by the class of the mobile station 100 and the transmission power request of the mobile station 100 (desired transmission power), and if the transmission power of the mobile station 100 is defined by the above-noted Equation (1), this is defined by the following Equation (9).

$$PH(i) = P_{CMAX} - \left\{ 10 \log_{10}(M_{PUSCH}(i)) + P_{O\_PUSCH}(j) + \alpha(j) \cdot PL + \Delta_{TF}(i) + f(i) \right\}$$

$$[\mathrm{dBm}] \quad \cdots \quad (9)$$

In FIG. 8, because the steps S401, S411, S412, S414, S421, S423, S424, and S425 are the same, respectively, as steps S301, S311, S312, S314, S321, S323, S324, and S325 in FIG. 7, descriptions thereof are omitted.

In FIG. 8, the mobile station 100 notifies the base station 200 and the RN 300 of PH (step S400).

The RN 300 receives the transmission power value from the mobile station 100, outputs the actual transmission output value, and measures the received power ($P_{RN, UETX}$) from the mobile station 100 (step S410). In the case of PH $\geq 0$, because the transmission power value requested of the mobile station 100 is no greater than $P_{CMAX}$, the RN 300 calculates $P_{CMAX}$ - PH(i) as the actual transmission output value. In the case of PH$\leq$0, however, because the transmission output requested of the mobile station 100 exceeds $P_{CMAX}$, the RN 300 calculates $P_{CMAX}$ as the actual transmission output value.

The base station 200 receives the transmission power value from the mobile station 100, calculates the actual transmission output value, and measures the received power ($P_{eNB, UETX}$) from the mobile station 100 (Step S420). The base station 200, the same as the RN 300, calculates the actual transmission output value.

In the operation of FIG. 8 as well, it is possible to achieve the same effect as the operation of FIG. 5 and FIG. 6. Also, even in the case in which the mobile station 100 moves away from the area of the RN 300, the RN 300 and the base station 200 may calculate the difference in propagation channel losses based on PH.

In the above-noted embodiment, in the judgment of being within an area and in the uplink transmission power control, the difference in uplink received power and the difference in propagation channel loss are examples of parameters that are responsive to the difference between the communication path quality between the mobile station 100 and the base station 200, and the communication path quality between the mobile station 100 and the RN 300. That is, using another communication quality difference, it is possible to make a judgment of being within an area and perform uplink transmission power control. For example, the difference in the SINR (signal-to-interference-plus-noise ratio) may be used. In the case of using the SINR, because it is possible to reflect the different communication path quality more accurately, the characteristics are improved. Also, for example, by providing the mobile station 100 with a GPS function, the coordinates of the mobile station 100 may be notified to the base station 200, the uplink communication path quality being predicted at the base station 200 from the coordinates of the mobile station 100, and a parameter being calculated, which expresses the difference in the uplink communication path quality.

According to the above-noted embodiment, even in the case in which a unique parameter (for example, the RN transmission power) cannot be notified to the mobile station, it is possible to properly and quickly set the transmission power by the mobile station, that is, the uplink transmission power.

That is, in a communication system in which the base station and the RN have a common cell ID (for example, Type2 relaying in LTE-A), it is expected that the transmission of a reference signal by the RN is not essential. Thus, the PL value of the reference signal of the base station is used in the PL (path loss) term for the uplink power control. Therefore, for example, when the connection destination of the mobile station from the base station is changed to the RN, the problem occurs that the uplink transmission power is excessive with respect to the RN. In the present invention, because different power control is performed between the case in which the connection destination of the mobile station 100 is the base station 200 and the case in which it is the RN 300, it is possible to solve this problem.

Also, in the case in which the mobile station 100 is connected to the RN 300, because the transmission power of the mobile station 100 generally becomes small, by applying the present invention, hindrance (interference) to other cells becomes small. Therefore, the overall system capacity becomes large.

Also, with the present invention, it is possible to solve the problem excessive transmission power with respect to the RN 300, without a major change to the conventional power control method, by introducing just one new parameter ($PL_{RN}$). Also, even if the new parameter is the offset with respect to a target value, it is possible to achieve the same effect.

In a conventional communication system, by comparing the receiving quality at a mobile station with respect to a transmission from a base station with the receiving quality at a mobile station with respect to a transmission from an RN (or another base station), a judgment is made as to which connection to make from the mobile station and, after the handover protocol, the uplink power control is performed in accordance with a initial parameter of a base station or an RN. However, in a communication system in which a signal (reference signal) that compares the receiving quality from the RN is not transmitted, with the conventional method it has not been possible to properly perform uplink transmission power control.

Also, in a communication system in which a signal (reference signal) that compares the receiving quality from the RN is not transmitted, because it is not possible at the mobile station to make a judgment with regard to being in an area by a comparison the receiving quality (received power, Ec/Io, path loss, and the like) for each base station (RN), with the present invention the judgment regarding being within an area is performed based on the propagation channel loss of the UL signal at the base station 200 and the RN.

A program for the purpose of implementing the various functions of the mobile station 100, the base station 200, and the RN 300 may be recorded on a computer-readable recording medium, and a computer system may be caused to read and execute the program recorded on the record medium, thereby performing the above-described various processing according to each of functions of the mobile station 100, the base station 200, and the RN 300. The term "computer system" used herein includes an operating system and also hardware, such as peripheral devices. The term "computer system" also includes a webpage-providing environment (or display environment) if the WWW system is used. The term "computer-readable recording medium" refers to a portable medium, such as a flexible disk, an optical-magnetic disc, a ROM, a writable nonvolatile memory such as a flash memory, and a CD-ROM, and a storage device, such as a hard disk, that is built into a computer system.

The term "computer-readable recording medium" includes something that retains a program for a certain time, for example, a volatile memory (for example, a DRAM (dynamic random-access memory) internally provided in a computer system acting as the server and client in the case in which the program is transmitted via a network such as the Internet or a communication line such as a telephone line. The above-noted program may be transferred to another computer system from a computer system that stores the program in a storage device via a transfer medium or may be transferred by transfer waves in a transfer medium. In this case, the "transfer medium" that transfers the program is a medium having a function of transferring information, such as a network (communication network) such as the Internet, or a communication circuit (communication line) such as a telephone circuit. The above-noted program may be for implementing a part of the above-described functions, and may also implement the above-described functions in combination with a program already stored in a computer system, as a so-called difference file (difference program).

Although the embodiments of the present invention have been described above with references made to the accompanying drawings, the specific constitution is not limited to the embodiments, and various design changes and the like are encompassed within the scope of the claims, without departing from the spirit of the present invention.

Industrial Applicability

The present invention can be widely used in mobile communication systems having a relay station.

Reference Symbols

| | |
|---|---|
| 1: | Wireless communication system |
| 100: | Mobile station |
| 101: | Transmitting and receiving antenna |
| 102: | Transmitting and receiving circuit |
| 105: | Control circuit |
| 1051: | Storage unit |
| 1052: | Processing unit |
| 106: | Peripheral circuit |
| 200: | Base station |
| 201: | Transmitting and receiving antenna |
| 202: | UE-directed transmitting and receiving circuit (parameter notification means) |
| 203: | RN-directed transmitting and receiving circuit |
| 205: | Control circuit |
| 2051: | Storage unit |
| 2052: | Processing unit (communication path quality calculating means, comparing means) |
| 206: | Peripheral circuit |
| 300: | RN (relay node) |
| 301: | Transmitting and receiving antenna |

302:   UE-directed transmitting and receiving circuit
303:   eNB-directed transmitting and receiving circuit
305:   Control circuit
3051:  Storage unit
3052:  Processing unit
306:   Peripheral circuit

**Claims**

1.  A wireless communication system comprising a base station, one or a plurality of relay stations associated with the base station, and one or a plurality of mobile stations;
    wherein, when the mobile station and the base station communicate without going through the relay station, the wireless communication system uses a first transmission power control method to control the transmission power of the mobile station, and, when the mobile station and the base station communicate via the relay station, the wireless communication system uses a second transmission power control method to control the transmission power of the mobile station.

2.  The wireless communication system according to claim 1 wherein, when the second transmission power control method is used to control the transmission power of the mobile station, in addition to a power control parameter used in the first transmission power control method for controlling the transmission power of the mobile station, another parameter responsive to the difference between the communication path quality between the mobile station and the base station and the communication path quality between the mobile station and the relay station is used.

3.  The wireless communication system according to claim 2, wherein the another parameter is a parameter responsive to the difference between the received power at the base station with respect to the transmission from the mobile station and the received power at the relay station with respect to the transmission from the mobile station.

4.  The wireless communication system according to claim 2, wherein the another parameter is a parameter responsive to the difference between a propagation channel loss between the mobile station and the base station and a propagation channel loss between the mobile station and the relay station.

5.  The wireless communication system according to claim 2, wherein the another parameter is a parameter responsive to the difference between the SINR at the base station and the SINR at the relay station.

6.  The wireless communication system according to claim 1, wherein, in accordance with the result of comparing the difference between a propagation channel loss between the mobile station and the base station with respect to the transmission from the mobile station and a propagation channel loss between the mobile station and the relay station with respect to the transmission from the mobile station, with a prescribed threshold value, when the mobile station and the base station communicate, judgment is done of whether or not to go through the relay station.

7.  The wireless communication system according to claim 6, wherein the prescribed threshold value adaptively changes.

8.  A base station device, wherein, when communication with a mobile station is performed without going through a relay station, a first transmission power control method is used to control the transmission power of the mobile station, and when communication with a mobile station is performed via the relay station, a second transmission power control method is used to control the transmission power of the mobile station.

9.  A base station device comprising:

    communication path quality calculating means for calculating the difference between a communication path quality between a mobile station and the base station device and communication path quality between the mobile station and the relay station; comparing means for comparing the difference in a communication path quality calculated by the communication path quality calculation means with a prescribed threshold value; and a parameter notification means for notifying the mobile station of a parameter responsive to the difference in the communication path quality calculated by the communication path quality calculation means in accordance with the results compared by the comparing means.

**10.** A mobile station device; wherein,

when communication with a base station is performed without going through a relay station, a first transmission power control method is used to control the transmission power, and when communication with a base station is performed via a relay station, a second transmission power control method is used to control the transmission power.

**11.** A wireless communication method between a base station, one or a plurality of relay stations associated with the base station, and one or a plurality of mobile stations;

wherein, when the mobile station and the base station communicate without going through the relay station, the wireless communication method uses a first transmission power control method to control the transmission power of the mobile station, and, when the mobile station and the base station communicate via the relay station, the wireless communication method uses a second transmission power control method to control the transmission poser of the mobile station.

EP 2 501 190 A1

# FIG. 1

# FIG. 2

# FIG. 3

EP 2 501 190 A1

# FIG. 4

EP 2 501 190 A1

# FIG. 5

```
        200              300              100
 (BASE STATION DEVICE)   (  RN  )    (MOBILE STATION)
```

S100
NOTIFY OF TRANSMISSION
POWER VALUE

A

S120
MEASURE RECEIVED POWER
FROM MOBILE STATION

S110
MEASURE RECEIVED POWER
FROM MOBILE STATION

S111
NOTIFY OF RECEIVED POWER
FROM MOBILE STATION

S121
CALCULATE PROPAGATION
LOSS FROM MOBILE STATION
TO BASE STATION

S122
CALCULATE PROPAGATION LOSS
FROM MOBILE STATION TO RN

S123
CALCULATE CORRECTION VALUE,
WHICH IS THE DIFFERENCE IN
PROPAGATION CHANNEL LOSSES

S124
CORRECTION
VALUE ≧ THRESHOLD
VALUE?

NO

REPEAT A

YES

S125
NOTIFY OF CORRECTION
VALUE AND PASSING OF
TRANSMISSION POWER CONTROL

S114
NOTIFY THAT POWER
CONTROL SHOULD BE DONE
IN ACCORDANCE WITH
CONTROL EQUATION (4)

S101
CONTROL POWER IN
ACCORDANCE WITH
CONTROL EQUATION (4)

END          END          END

# FIG. 6

```
          ╭────200              ╭────300              ╭────100
    ┌──────────────────┐   ┌──────────┐      ┌──────────────────┐
    │BASE STATION DEVICE│   │    RN    │      │  MOBILE STATION   │
    └──────────────────┘   └──────────┘      └──────────────────┘
            │                   │                     │  ╭──S200
            │                   │            ┌──────────────────────┐
            │←──────────────────│←───────────│  NOTIFY OF TRANSMISSION│
            │                   │            │     POWER VALUE        │
            │                   │            └──────────────────────┘
```

╭──B

```
         ╭──S220              ╭──S210
┌──────────────────┐  ┌──────────────────┐
│MEASURE RECEIVED POWER│ │MEASURE RECEIVED POWER│
│  FROM MOBILE STATION │ │  FROM MOBILE STATION │
└──────────────────┘  └──────────────────┘
                             ╭──S211
                      ┌──────────────────┐
                      │NOTIFY OF RECEIVED POWER│
          ╭──S221     │  FROM MOBILE STATION   │
      ←───────────────└──────────────────┘
┌──────────────────┐
│ CALCULATE PROPAGATION │
│ LOSS FROM MOBILE STATION│
│    TO BASE STATION     │
└──────────────────┘
          ╭──S222
┌──────────────────┐
│ CALCULATE PROPAGATION LOSS│
│  FROM MOBILE STATION TO RN │
└──────────────────┘
          ╭──S223
┌──────────────────┐
│CALCULATE CORRECTION VALUE,│
│ WHICH IS THE DIFFERENCE IN │
│PROPAGATION CHANNEL LOSSES │
└──────────────────┘
          ╭──S224
      ◇ CORRECTION ◇    NO
    ◇VALUE ≦ THRESHOLD◇─────┐
      ◇   VALUE?   ◇        │
          │YES        ┌──────────┐
          │           │ REPEAT B │
          │           └──────────┘
```

```
          ╭──S225
┌──────────────────┐
│   REQUEST RETURN OF │
│ TRANSMISSION POWER  │
│ CONTROL OF THE MOBILE│──────────→
│  STATION TO ITSELF  │        ╭──S214
└──────────────────┘    ┌──────────────────┐
          │             │  NOTIFY THAT POWER │
          │             │ CONTROL SHOULD BE DONE│────────→
          │             │  IN ACCORDANCE WITH │       ╭──S201
          │             │ CONTROL EQUATION (3)│  ┌──────────────────┐
          │             └──────────────────┘  │  CONTROL POWER IN   │
          │                   │                │ ACCORDANCE WITH     │
          │                   │                │CONTROL EQUATION (3) │
          │                   │                └──────────────────┘
      ┌───────┐          ┌───────┐                  ┌───────┐
      │  END  │          │  END  │                  │  END  │
      └───────┘          └───────┘                  └───────┘
```

# FIG. 7

```
      ╭──────200           ╭──────300           ╭──────100
   ( BASE STATION DEVICE )    (    RN    )      ( MOBILE STATION )
```

├─────────────────────────────────────────────────── ╭──S300
│                                          │ NOTIFY OF TRANSMISSION │
│←─────────────────────────────────────────│      POWER VALUE       │

┌ ─ ─ ─ ─ ─ ─ ─ ─ ─ ─ ─ ─ ─ ─ ─ ─ ─ ─ ─ ─ ─ ─ ─ ╭──C ─ ─ ─ ─ ─ ┐

| ╭──S320 | ╭──S310 |
|---|---|---|
| MEASURE RECEIVED POWER FROM MOBILE STATION | MEASURE RECEIVED POWER FROM MOBILE STATION | |

╭──S321                              ╭──S311

| CALCULATE PROPAGATION LOSS FROM MOBILE STATION TO BASE STATION | CALCULATE PROPAGATION LOSS FROM MOBILE STATION TO RN |
|---|---|

╭──S312

NOTIFY OF PROPAGATION LOSS FROM MOBILE STATION TO RN

╭──S323

CALCULATE CORRECTION VALUE, WHICH IS THE DIFFERENCE IN PROPAGATION CHANNEL LOSSES

╭──S324

CORRECTION VALUE ≧ THRESHOLD VALUE?    NO → REPEAT C

YES

╭──S325

NOTIFY OF CORRECTION VALUE AND PASSING OF TRANSMISSION POWER CONTROL

╭──S314

NOTIFY THAT POWER CONTROL SHOULD BE DONE IN ACCORDANCE WITH CONTROL EQUATION (4)

╭──S301

CONTROL POWER IN ACCORDANCE WITH CONTROL EQUATION (4)

( END )        ( END )        ( END )

# FIG. 8

**200**
BASE STATION DEVICE

**300**
RN

**100**
MOBILE STATION

**S400**
NOTIFY OF PH

**C**

**S420**
MEASURE RECEIVED POWER FROM MOBILE STATION

**S410**
MEASURE RECEIVED POWER FROM MOBILE STATION

**S421**
CALCULATE PROPAGATION LOSS FROM MOBILE STATION TO BASE STATION

**S411**
CALCULATE PROPAGATION LOSS FROM MOBILE STATION TO RN

**S412**
NOTIFY OF PROPAGATION LOSS FROM MOBILE STATION TO RN

**S423**
CALCULATE CORRECTION VALUE, WHICH IS THE DIFFERENCE IN PROPAGATION CHANNEL LOSSES

**S424**
CORRECTION VALUE ≧ THRESHOLD VALUE?

NO
REPEAT C

YES

**S425**
NOTIFY OF CORRECTION VALUE AND PASSING OF TRANSMISSION POWER CONTROL

**S414**
NOTIFY THAT POWER CONTROL SHOULD BE DONE IN ACCORDANCE WITH CONTROL EQUATION (4)

**S401**
CONTROL POWER IN ACCORDANCE WITH CONTROL EQUATION (4)

END

END

END

# FIG. 9

DOWNLINK CHANNELS

PDSCH

PMCH

PDCCH

PBCH

PCFICH

PHICH

UE

eNodeB

PRACH

PUSCH

PUCCH

UPLINK CHANNELS

# FIG. 10

| UE | | EUTRAN |

RRCConnectionReconfiguration

RRCConnectionReconfigurationComplete

## INTERNATIONAL SEARCH REPORT

| | International application No. |
|---|---|
| | PCT/JP2010/069996 |

**A. CLASSIFICATION OF SUBJECT MATTER**
*H04W52/46*(2009.01)i, *H04B7/15*(2006.01)i, *H04W16/26*(2009.01)i

According to International Patent Classification (IPC) or to both national classification and IPC

**B. FIELDS SEARCHED**

Minimum documentation searched (classification system followed by classification symbols)
H04W4/00-H04W99/00, H04B7/15, H04B7/24-H04B7/26

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-199504 A (Mitsubishi Electric Corp.), 28 August 2008 (28.08.2008), fig. 1 (Family: none) | 1-11 |
| Y | WO 2009/011531 A2 (LG ELECTRONICS INC.), 22 January 2009 (22.01.2009), & US 2009/0017752 A1 & JP 2010-522495 A | 1-11 |
| A | Alcatel-Lucent, CHTHL, System Design Frameworks to Support TYPE II Relay Operation in LTE-A, 3GPP R1-092321, 3GPP, 2009.07.29., PP1-11 | 1-11 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 December, 2010 (03.12.10) | 14 December, 2010 (14.12.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009257216 A